# EUROPÄISCHE PATENTSCHRIFT

(11) **EP 1 617 965 B1**
(45) Veröffentlichungstag und Bekanntmachung des Hinweises auf die Patenterteilung: **22.07.2009**
(21) Anmeldenummer: 04729881.5
(22) Anmeldetag: 28.04.2004
(51) Int. Cl.: B23K 26/067

(54) **VERFAHREN ZUM LASERSCHWEISSEN UND LASERSCHWEISSANORDNUNG**
LASER WELDING METHOD AND LASER WELDING ARRANGEMENT
PROCEDE ET INSTALLATION DE SOUDAGE LASER

(30) Priorität: 29.04.2003 DE 20306581 U
(43) Veröffentlichungstag der Anmeldung: 25.01.2006
(73) Patentinhaber: KUKA Systems GmbH, 86165 Augsburg (DE)
(72) Erfinder: RIPPL, Peter, 86163 Augsburg (DE)
(74) Vertreter: Ernicke, Hans-Dieter
(86) Internationale Anmeldenummer: PCT/EP2004/004463
(87) Internationale Veröffentlichungsnummer: WO 2004/096481

(56) Entgegenhaltungen:
- EP-A- 0 857 536
- EP-A- 1 228 833
- US-A- 4 654 505
- US-B1- 6 204 469
- JOHN MACKEN: "Remote Laser Welding" IBEC'96 ADVANCED TECHNOLOGIES AND TECHNOLOGIES, 1996, Seiten 11-15, XP002293450

## Beschreibung

Die Erfindung betrifft ein Verfahren zum Laserschweißen. und eine Laserschweißanordnung zum Schweißen von Bauteilen mit den Merkmalen im Oberbegriff des Verfahrens- und Vorrichtungshauptanspruchs.

Die EP 1 228 833 A2 zeigt ein gattungsgemäßes Laserschweißverfahren nebst Laserschweißanordnung. In einer Laserschweißzelle ist ein als Remote-Laser ausgebildeter Laserschweißkopf mit Distanz zu einem einachsig beweglichen Bandförderer angeordnet, auf dem Paletten mit jeweils mehreren Bauteilen beim Schweißen relativ zum Laserschweißkopf transportiert werden. Auf den Paletten sind jeweils mehrere Bauteile in einer unbestimmten Lage angeordnet. Die Laserschweißzelle weist verschiedene Messeinrichtungen auf, die einen Sensor für die Palettenorientierung, einen Sensor für die Fördergeschwindigkeit und einen Sensor für die Erfassung der Werkstückpositionen auf den Paletten umfassen. Die verschiedenen und relativ kleinen Werkstücke werden während des linearen Transports an verschiedenen Seiten geschweißt, wobei der Laserstrahl zwischen den Werkstücken hin und her geschaltet wird. Die Schweißvorgänge finden intermittierend statt, wobei der Laserstrahl zunächst auf die Vorderseite und Oberseite der ankommenden Werkstücke gerichtet wird. Sobald diese den Laserschweißkopf passiert haben, wird der Laserstrahl umgerichtet und zielt auf die Rückseiten der Werkstücke. Die Laserschweißzelle ist in eine Fertigungsanlage mit einem Fördersystem integriert, wobei angestrebt wird, möglichst viele Werkstücke in möglichst kurzer Zeit zu schweißen. Die Werkstücke können durch die Laserschweißtechnik nur relativ einfache Formgebungen und eine kleine Baugröße haben.

Andere Verfahren und Laserschweißanordnungen sind aus der Praxis bekannt. Sie werden zum Beispiel zum Schweißen von Bauteilen von Fahrzeugkarosserien eingesetzt und bestehen aus ein oder mehreren Laserschweißköpfen. Die Laserschweißköpfe werden von Robotern entlang des stehenden Bauteils oder Werkstücks bewegt. Beispielsweise werden in der Karosseriefertigung zuerst Untergruppen wie vorderer Boden, Mittelboden und hinterer Boden gefertigt, die dann zu Hauptgruppen gefügt, in der Geometriestation zu einem kompletten Fahrzeugverbund geheftet und dann in einer Ausschweißlinie komplett ausgeschweißt werden. Der Bauteiltransport erfolgt hierbei zum Beispiel durch Shuttle-Systeme oder durch Industrieroboter mittels Greifer in Robotergärten bei der Untergruppenfertigung. Während des Schweißbetriebs sind die Bauteile jedoch stationär gehalten und üblicherweise auch gespannt. Die Laserschweißköpfe können eine kurze Brennweite haben und werden vom Roboter in unmittelbarer Nähe und mittels einer Spannrolle in Kontakt mit dem Bauteil bewegt. Kommt die Laserstrahl-Remote-Technik mit distanzierten Lasern und längeren Brennweiten zur Anwendung, wird der Laserstrahl üblicherweise durch eine ein- oder mehrachsige Scanneroptik abgelenkt und bewegt. Hierbei kann der Laserschweißkopf stationär angeordnet oder von einem Roboter geführt werden. In der Regel überstreicht der von der Scanneroptik bewegte Laserstrahl ein gewisses Arbeitsfeld, welches durch Handhabung des Laserschweißkopfes mittels eines Industrieroboters oder dergleichen entsprechend vergrößert werden kann. Dies geschieht dann entweder durch eine Versatzbewegung des Laserschweißkopfes durch den Industrieroboter im Point-to-Point-Betrieb (PTP-Betrieb) oder durch eine kontinuierliche Weiterbewegung des Laserschweißkopfes durch den Industrieroboter im Bahnbetrieb, wobei dann eine Überlagerung von Roboterbewegung und Scannerspiegelbewegung gegeben ist. Durch eine entsprechende Steuerung und Programmierung der Scanneroptik und der Roboterbewegung ergibt sich die resultierende Gesamtbahn bzw. Schweißnaht. Zwischen dem Zeitanteil Bauteiltransport und der Wertschöpfung am Bauteil bzw. den dazu notwendigen und daraus resultierenden Investitions- und Betriebskosten liegt je nach Anlagenkonzept und Fertigungsmethode ein bislang noch relativ ungünstiger Kosten- und Zeitanteil.

Die EP-A-0 857 536 zeigt eine stationäre Schweißstation mit stationären Laserschweißköpfen, von denen eine Vielzahl rund um die Karosserie verteilt angeordnet sind. Die Laserschweißköpfe sind als Remote-Laser ausgebildet und mit Distanz zum Werkstück angeordnet. Während des Schweißprozesses ruht das Werkstück und ist in einer vorgegebenen Stellung fixiert, wobei es in dieser Stellung auch durch Kameras vermessen wird.

Aus der Literaturstelle "Remote Laser Welding", John Macken, ist ein Remote-Laser-System bekannt, mit dem ruhende Werkstücke geschweißt werden.

In der US-A-6,204,469 ist eine Laserschweißeinrichtung beschrieben, bei der die zu schweißenden Bleche mit einem Transportroboter zugeführt und abgeführt werden. Der Roboter übergibt außerdem die Bleche an einen anderen Förderer, der sie in die Schweißstellung unter einem Schweißportal bringt. In dieser Schweißstellung werden die Bleche auf einem Tisch fixiert. Die Laserköpfe sind an einem Kreuzschlittenportal angebracht und werden zum Schweißen zweiachsig über das fixierte Bauteil bewegt.

Es ist Aufgabe der vorliegenden Erfindung, eine bessere Laserschweißanordnung aufzuzeigen.

Die Erfindung löst diese Aufgabe mit den Merkmalen im Verfahrensanspruch 11 und Vorrichtungshauptanspruch 1. Durch den Einsatz einer gesteuerten Bauteilhandhabung während des Schweißbetriebs in Verbindung mit der Laser-Remote-Technik beim Laserstrahlschweißen lassen sich kostenoptimierte Anlagenkonzepte erstellen. Diese können noch weiter verbessert werden, wenn eine zeitoptimierte Zuweisung der Laserstrahlquelle bzw. des Laserstrahls stattfindet, was zum Beispiel durch Strahlweichen geschehen kann. Hierbei wird durch entsprechende Steuer-und Regelvorgänge der zeitanteil für den Bauteiltransport mit gleichzeitiger Wertschöpfung am Bauteil optimal ausgenutzt. Hierbei werden die Bauteilbewegung und die Laserstrahlbewegung einander überlagert, durch die im resultierenden Bewegungsablauf eine optimale Schweißbewegung entsteht. Der Laserschweißkopf kann hierbei stationär oder beweglich angeordnet sein.

Bei einer Bauteilhandhabung mittels einer geeigneten Bewegungseinrichtung, vorzugsweise eines mehrachsigen Industrieroboters bzw. Gelenkarmroboters, kann auch der Fokusabstand über die Bauteilbewegung ausgeglichen und nachgeführt werden. Eine solche optimierte Führung des Fokusabstands ermöglicht es andererseits, Remote-Laser mit kürzerer Brennweite von zum Beispiel 250 mm einzusetzen. Bei Remote-Lasern waren bislang Brennweiten von 1 m und mehr wegen der Tiefenschärfe und der Fokusverlagerung erforderlich. Die verkürzbare Brennweite hat wiederum den Vorteil, dass die Schweißgeschwindigkeit deutlich erhöht werden kann, wobei Geschwindigkeiten von 4 bis 6 m/min und mehr je nach Fasertyp und -qualität erreichbar sind. Bei einem bewegten Laserschweißkopf mit Scanneroptik können noch höhere Geschwindigkeiten erreicht werden. Ein weiterer Vorteil der herabgesetzten Brennweite ist die einhergehende Verbesserung der Strahlqualität, was sich wiederum in einer verbesserten Schweißqualität und erhöhten Schweißgeschwindigkeit niederschlägt.

In den Unteransprüchen sind weitere vorteilhafte. Ausgestaltungen der Erfindung angegeben.

Die Erfindung ist in den Zeichnungen beispielsweise und schematisch dargestellt. Im einzelnen zeigen:
- Figur 1:: einen Robotergarten mit mehreren von einer gemeinsamen Laserstrahlquelle versorgten stationären Laserschweißköpfen und einer Bauteilhandhabung mittels Roboter,
- Figur 2:: eine variante Anordnung von Figur 1 mit einem größeren und durch zwei Roboter gehandhabten Bauteil in Verbindung mit mehreren begrenzt beweglich angeordneten Laserschweißköpfen,
- Figur 3 und 4:: Laserschweißanordnungen mit einem mittels Roboter bewegten Laserschweißkopf und
- Figur 5:: eine Fertigungsanlage mit mehreren unterschiedlich ausgebildeten Laserschweißstationen.

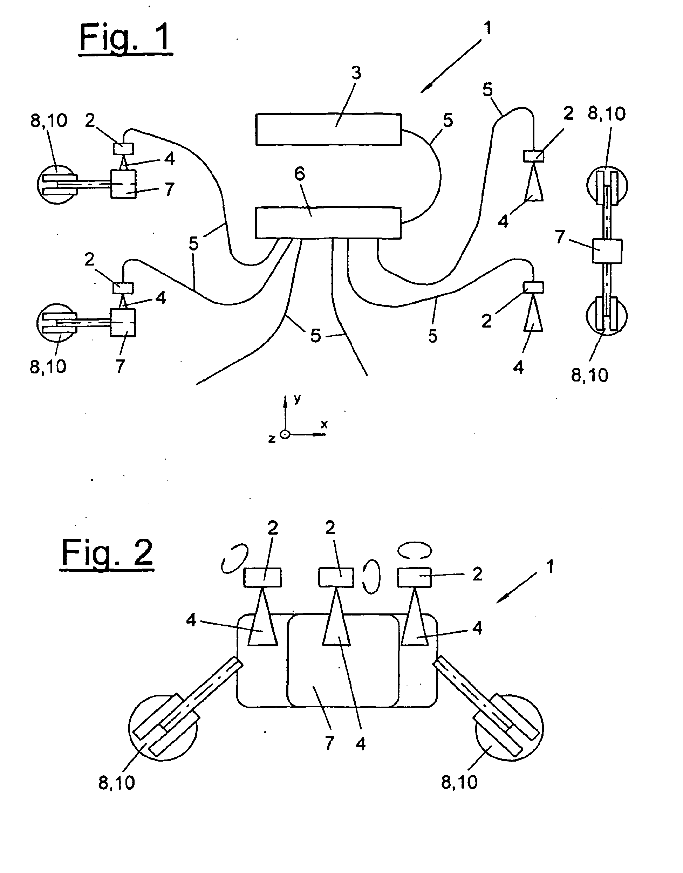

Figur 1 zeigt eine Laserschweißanordnung (1) mit mindestens einer Laserstrahlquelle (3), die mittels einer Laserstrahlführung (5), zum Beispiel einem Lichtleitfaserkabel, mit einer Strahlweiche (6) verbunden ist. Von der Strahlweiche (6) wird der eingekoppelte Laserstrahl auf mehrere weitere Laserstrahlführungen (5) verteilt, die jeweils mit einem Laserschweißkopf (2) verbunden sind.

Die Laserschweißköpfe (2) sind im Ausführungsbeispiel von Figur 1 allesamt stationär angeordnet. Sie sind jeweils als Remote-Laserköpfe ausgebildet, die mit einem Abstand und ohne Berührungskontakt zum Werkstück oder Bauteil (7) angeordnet sind und durch eine geeignete stationäre Trageinrichtung schwebend gehalten werden. Die Remote-Laserköpfe besitzen eine vorzugsweise mehrachsig bewegliche Scanneroptik mit Scannerspiegeln oder dergleichen, die eine Ablenkung des Laserstrahls (4) in verschiedene Richtungen zulassen. Durch die Scanneroptik kann der Laserstrahl (4) hierbei sehr schnell und zielgenau bewegt werden.

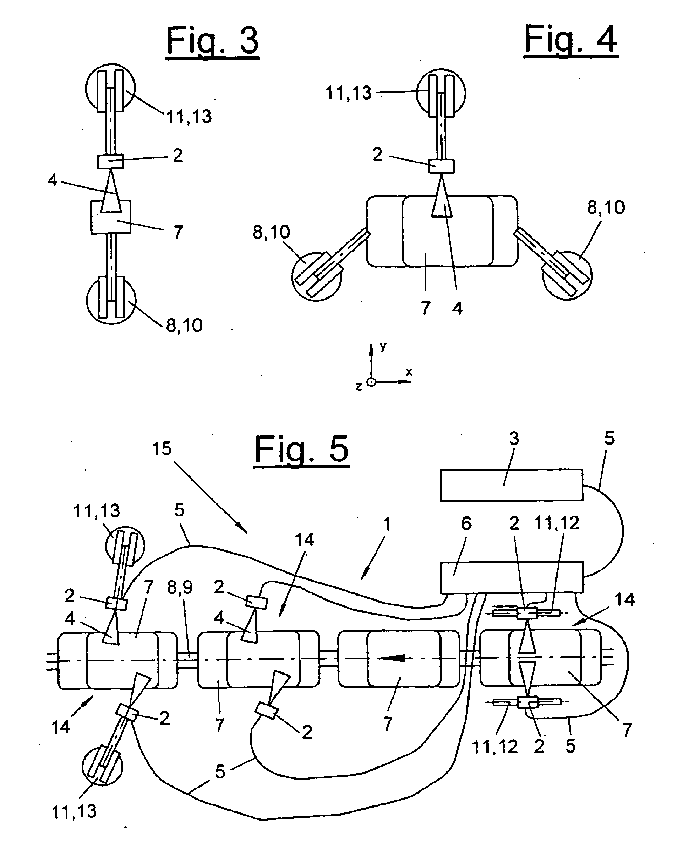

Alternativ kann auf die Scanneroptik verzichtet werden, wobei die Laserschweißköpfe (2) einen unbewegten Laserstrahl (4) emittieren. In weiterer Abwandlung ist es möglich, die Laserschweißköpfe (2) zwar stationär anzuordnen, an ihrer Position aber drehbeweglich zu halten und z.B. an der gelenkigen Hand eines mehrachsigen Gelenkarmroboters wie in der Variante von Figur 3 und 4 zu befestigen, wobei ggf. ein Ausleger zwischengeschaltet sein kann. Bei einer entsprechenden Anordnung und Ausrichtung kann der Laserstrahl (4) durch kleine und schnelle Achsbewegungen der mehrachsigen, z.B. dreiachsigen, Roboterhand des ansonsten stehenden Roboters bewegt werden. Die Handachsenbewegung kann die Scanneroptik ersetzen.

Die Laserschweißköpfe (2) haben vorzugsweise eine Brennweite zwischen 200 und 400 mm. Eine besonders günstige Brennweite beträgt zum Beispiel 250 mm.

Bei der Laserschweißanordnung (1) werden ein oder mehrere Bauteile (7) von den Laserschweißköpfen (2) mit dem bewegten Laserstrahl (4) geschweißt. Die Bauteile (7) sind beispielsweise Karosseriebauteile von Fahrzeugen. Die Bauteile (7) werden hierbei gegenüber den distanziert angeordneten Laserschweißköpfen (2) mittels geeigneter Bewegungseinrichtungen (8) entlang einer vorgegebenen, programmierten und vorzugsweise mehrachsigen Bewegungsbahn geführt und bewegt. Die Bewegungsbahn kann beliebig im Raum verlaufen und beliebig gekrümmt sein. Im gezeigten Ausführungsbeispiel sind die Bewegungseinrichtungen (8) mehrachsige Roboter (10), die vorzugsweise als sechsachsige Gelenkarmroboter mit rotatorischen Achsen ausgebildet sind. Die Roboter (10) können alternativ weniger oder mehr Achsen haben, zum Beispiel zusätzliche Linear- oder Fahrachsen. Die Achsen können ferner translatorische Achsen oder Kombinationen von rotatorischen und translatorischen Achsen sein.

Die Bauteile (7) sind im Ausführungsbeispiel der Figur 1 in einem normalen Greifer gespannt. Sie können alternativ auch in einem so genannten Geogreifer in hochpräziser Lage genau bespannt sein. Der Roboter (10) handhabt den Greifer und die Spanneinrichtung mit dem Bauteil und bewegt diese relativ zu dem stationären Laserschweißkopf (2) und dem bewegten Laserstrahl (4).

Bei der Ausführungsform von Figur 1 der stationären Laserschweißköpfen (2) führen die Roboter (10) die komplette Versatzbewegung der Bauteile (7) mit Umorientierung zum Nahtanfang und mit anschließender Bahnbewegung aus. Dies ist vor allem bei längeren Schweißnähten vorteilhaft. Die Roboter (10) sind hierfür entsprechend programmiert und gesteuert. Die Nahtformen sind vorzugsweise Überlapp- und Kehlnähte, wobei auch andere Nahtformen, wie Stumpfstösse oder dgl. möglich sind.

Wenn das Ende der jeweils geschweißten Naht an einem Bauteil (7) erreicht ist, kann der Laserstrahl (4) von der Strahlweiche (6) sofort umgeschaltet und einem anderen Laserschweißkopf (2) und dem dortigen Bauteil (7) zugewiesen werden. Der zugehörige Roboter (10) hat in diesem Fall das Bauteil (7) bereits an den Nahtanfang der zu schweißenden Naht positioniert. Während des Schweißvorgangs können die anderen Roboter (10) ein zuvor geschweißtes Bauteil (7) zum Schweißen der nächsten Naht umorientieren und neu positionieren. Sie können alternativ auch ein anderes Bauteilhandling, zum Beispiel einen Wechsel der Bauteile, eine Aufnahme und Bestückung des Bauteils (7) mit weiteren Kleinteilen etc. durchführen.

Sind viele kurze und hintereinander liegende Nähte, wie zum Beispiel Flanschnähte im Längsträger- und Schwellerbereich zu Schweißen, so ist der Einsatz von einachsigen Scanneroptiken vorteilhaft. Diese Scanneroptiken lenken den Laserstrahl (4) nur in einer festgelegten Richtung ab. Der Roboter (10) positioniert das Bauteil (7) vorzugsweise mit derjenigen Richtung, die im Wesentlichen der einachsigen Scanbewegung entspricht. Die Versatzbewegung von Naht zu Naht übernimmt die Scanneroptik. Die Orientierungs- und Positionsänderungen werden durch den Roboter (10) und seine Bauteilhandhabung während der Bahnbewegung übernommen. Werden Abschnitte erreicht, bei denen der lineare Scanbereich bzw. der Arbeitsraum des Roboters (10) eine größere versatzbewegung bzw. eine stärkere Orientierungsänderung erfordert, erfolgt in der vorerwähnten Weise die Umschaltung des Laserstrahls (4) zu einem anderen Laserschweißkopf (2). Dadurch ergeben sich optimierte Belegungs- und Auslastungszeiten für die Laserstrahlquelle (3).

Die Scanneroptiken können alternativ zwei oder drei Achsen haben. In der dritten Achse kann ein Z-Ausgleich in Strahlrichtung erfolgen. Der Einsatz solcher Scanneroptiken erfordert Roboterbewegungen erst dann, wenn der Scanbereich verlassen wird oder wenn Orientierungsänderungen der Bauteile (7) in einen neuen Scanbereich erforderlich sind. Wenn keine Schweißbewegungen mehr möglich sind und länger dauernde Roboterbewegungen anstehen, wird auch hier der Laserstrahl (4) zu einem anderen schweißbereiten Laserschweißkopf (2) umgeschaltet. Damit werden auch hier optimale Belegungs-und Auslastungszeiten erreicht.

Figur 2 zeigt eine Variante zu Figur 1, bei der ein größeres Bauteil (7), zum Beispiel eine Seitenwand oder eine komplette Karosserie von zwei oder mehr miteinander kooperierenden Robotern (10) gehandhabt wird. Die Laserschweißanordnung (1) sieht in diesem Fall mehrere, zum Beispiel drei im Wesentlichen stationäre Laserschweißköpfe (2) vor, die allerdings eine zusätzliche Bewegungsachse haben können, die in der Zeichnung durch Pfeile angegeben ist. Dies könnten insbesondere Dreh- und Schwenkbewegungen sein, mit denen die auch hier mit ein oder mehreren Achsen ausgerichteten Scanneroptiken einen vergrößerten Arbeitsraum erlauben.

Bei den gezeigten Ausführungsformen von Figur 1 und 2 kann durch eine entsprechende Bauteilbewegung durch die Roboter (10) der Fokusabstand der Laserschweißköpfe (2) nachgeführt werden. Wenn durch die Scanneroptik der Laserstrahl ausgelenkt wird, kann sich der Strahlweg bis zum Auftreffpunkt oder Laserfleck auf dem Bauteil (7) verändern. Bei Laserschweißköpfen (2) mit fester Brennweite kann hierbei der Laserfleck den Fokuspunkt verlassen, was eine Verschlechterung der Strahlqualität und der Schweißgüte zur Folge haben kann. Durch eine entsprechende Bauteilbewegung mittels Roboter (10) kann dieser Versatz ausgeglichen werden, wobei das Bauteil (7) stets im gewünschten und für den jeweiligen Prozessschritt optimalen Abstand zum Laserschweißkopf (2) bzw. der Scanneroptik geführt wird. Hierbei muss das Bauteil (7) nicht ständig im Fokuspunkt des Laserstrahls (4) gehalten werden. Es ist alternativ möglich, das Bauteil (7) in einem bewussten Abstand vor oder hinter dem Fokuspunkt in Strahlrichtung zu führen und zu halten, um bestimmte Schweißoptionen zu haben. Beispielsweise kann eine mit der Defokussierung einhergehende Vergrößerung des Laserflecks gewünscht sein, um eine breitere Schweißnaht zu erzielen. Je genauer allerdings das Bauteil (7) im oder am Fokuspunkt gehalten und geführt wird, desto besser ist die Laserstrahleinkopplung am Bauteil (7) und auch die Energieumsetzung und Schweißgüte. Dementsprechend hoch kann auch die Schweißgeschwindigkeit in Richtung der zu schweißenden Bahn sein.

Figur 3 und 4 zeigen eine weitere Variante, in welcher der Laserschweißkopf (2) nicht mehr stationär angeordnet ist, sondern von einer geeigneten Bewegungseinrichtung (11), zum Beispiel einem mehrachsigen Schweißroboter (13) bewegt wird. Dieser Roboter (13) kann die gleiche Kinematik wie der vorbeschriebene Handlingroboter (10) für die Bauteile (7) haben. In der Variante von Figur 3 wird hierbei das Bauteil (7) von einem einzelnen Roboter (10) gegenüber einem Schweißroboter (13) geführt. Bei der Abwandlung von Figur 4 bewegen zwei kooperierende Roboter (10) gemeinsam ein Bauteil (7) gegenüber ein oder mehreren Schweißrobotern (13).

Figur 5 zeigt schematisch eine komplette Fertigungsanlage (15), die nicht unter die Ansprüche 1 und 11 fällt, mit mehreren Laserschweißstationen (14), die wiederum von ein oder mehreren gemeinsamen Laserstrahlquellen (3) über Strahlweichen (6) und Laserstrahlführungen (5) selektiv beaufschlage werden.

In der Fertigungsanlage (15) werden mehrere Bauteile (7), zum Beispiel geheftete Fahrzeugkarosserien von einem linearen Bauteilförderer (9), zum Beispiel einem taktweise transportierenden Shuttle oder einem kontinuierlich transportierenden Rollenförderer oder dergleichen in Pfeilrichtung transportiert. In den verschiedenen Laserschweißstationen (14) werden unterschiedliche Schweißaufgaben durchgeführt. In der ersten Laserschweißstation (14), die unterhalb der Strahlweiche (6) dargestellt ist, sind zum Beispiel beidseits des Bauteils (7) ein oder mehrere Laserschweißköpfe (2) auf einer Bewegungseinrichtung (11) in Bauteilförderrichung beweglich angeordnet. Die Bewegungseinrichtung (11) kann in diesem Fall ein Linearförderer (12) sein. Hierbei werden die Laserschweißköpfe (2) mit ihren Laserstrahlen (4) längs des stehenden oder bewegten Bauteils (7) verfahren. Die Laserschweißköpfe (2) können hierbei die vorbeschriebene ein- oder mehrachsige Scanneroptik haben.

In der Folgestation können andere nicht weiter dargestellte Bearbeitungen oder Tätigkeiten am Bauteil (7) vorgenommen werden. In der nachfolgenden Laserschweißstation (14) sind wiederum vorzugsweise beidseits des Bauteils (7) ein oder mehrere Laserschweißköpfe (2) angeordnet, die in diesem Fall stationär positioniert sind. Die Relativbewegung zwischen Laserschweißkopf (2) bzw. Laserstrahl (4) und dem Bauteil (7) kann in diesem Fall auch durch den Bauteilförderer (9) erzeugt werden.

In der letzten Laserschweißstation (14) sind wiederum beidseits des Bauteils (7) ein oder mehrere Schweißroboter (13) der in Figur 3 gezeigten Art angeordnet.

Abwandlungen der gezeigten Ausführungsbeispiele sind in verschiedener Weise möglich. Anstelle der Roboter (10) können andere mehrachsige Bewegungseinrichtungen (8) vorhanden sein. Variabel sind auch die Bewegungseinrichtungen (11) für die Laserschweißköpfe (2), die ebenfalls als ein oder mehrachsige Einheiten, zum Beispiel als Kreuzschlitten mit zwei translatorischen Achsen ausgebildet sein können. Beliebig variabel ist zudem die Ausgestaltung der Laserschweißköpfe (2), die statt einer ein- oder mehrachsig beweglichen Scanneroptik im einfachsten Fall eine stationäre Fokussiereinheit mit einem unbeweglichen Laserstrahl (4) haben können. In diesem Fall werden sämtliche Relativbewegungen zwischen Laserstrahl (4) und Bauteil (7) durch die Bauteilhandhabung über die Bewegungseinrichtung (8) erzeugt. Ferner ist es möglich, anstelle der mit ein oder mehreren beweglichen und steuerbaren Spiegeln ausgerüsteten Scanneroptiken andere Ablenk- oder Führungseinheiten für den Laserstrahl (4) vorzusehen.

### BEZUGSZEICHENLISTE

- 1: Laserschweißanordnung
- 2: Laserschweißkopf, Remote-Laserkopf
- 3: Laserstrahlquelle
- 4: Laserstrahl
- 5: Laserstrahlführung, Lichtleitfaserkabel
- 6: Strahlweiche
- 7: Bauteil
- 8: Bewegungseinrichtung für Bauteil
- 9: Bauteilförderer
- 10: Roboter
- 11: Bewegungseinrichtung für Laserschweißkopf
- 12: Förderer, Linearförderer
- 13: Roboter, Schweißroboter
- 14: Laserschweißstation
- 15: Fertigungsanlage

## Patentansprüche

1. Laserschweißanordnung zum Schweißen von ein oder mehreren Bauteilen (7), bestehend aus ein oder mehreren als Remote-Laser ausgebildeten Laserschweißköpfen (2), die mit Distanz zum Bauteil (7) angeordnet werden können, wobei die Laserschweißanordnung (1) ein oder mehrere Bewegungseinrichtungen (8) für die Bauteile (7) für eine Relativbewegung beim Schweißen gegenüber dem Laserschweißkopf (2), aufweist, **dadurch gekennzeichnet, dass** die Bewegungseinrichtung (8) mehrachsig ausgebildet ist und das Bauteil (7) entlang einer vorgegebenen, programmierten und mehrachsigen Bewegungsbahn führbar und bewegbar ist.

2. Laserschweißanordnung nach Anspruch 1, **dadurch gekennzeichnet, dass** die Bewegungseinrichtung (8) als mehrachsiger Roboter (10) ausgebildet ist.

3. Laserschweißanordnung nach Anspruch 1 oder 2, **dadurch gekennzeichnet, dass** die Bewegungseinrichtung (8) einen Greifer zum Spannen des Bauteils (7) aufweist.

4. Laserschweißanordnung nach Anspruch 1, 2 oder 3, **dadurch gekennzeichnet, dass** der Laserschweißkopf (2) stationär angeordnet ist.

5. Laserschweißanordnung nach Anspruch 1, 2 oder 3, **dadurch gekennzeichnet, dass** der Laserschweißkopf (2) mittels einer Bewegungseinrichtung (11) instationär angeordnet ist.

6. Laserschweißanordnung nach einem der vorhergehenden Ansprüche, **dadurch gekennzeichnet, dass** der Laserstrahl (4) um mindestens eine Achse bewegbar ist.

7. Laserschweißanordnung nach einem der vorhergehenden Ansprüche, **dadurch gekennzeichnet, dass** der Laserschweißkopf (2) ein oder mehrere Scannerköpfe zur steuerbaren Ablenkung des Laserstrahls (4) aufweist.

8. Laserschweißanordnung nach einem der vorhergehenden Ansprüche, **dadurch gekennzeichnet, dass** Bewegungseinrichtung (8) für die Bauteile (7) nach dem Fokusabstand gesteuert ist.

9. Laserschweißanordnung nach einem der vorhergehenden Ansprüche, **dadurch gekennzeichnet, dass** der Laserschweißkopf (2) eine Brennweite von ca. 200 bis 400 mm aufweist.

10. Laserschweißanordnung nach einem der vorhergehenden Ansprüche, **dadurch gekennzeichnet, dass** mehrere Laserschweißköpfe (2) an eine gemeinsame externe Laserstrahlquelle (3) mittels einer steuerbaren Strahlweiche (6) und Laserstrahlführungen (5) angeschlossen sind.

11. Verfahren zum Laserschweißen von ein oder mehreren Bauteilen (7) mittels ein oder mehreren als Remote-Laser ausgebildeten und mit Distanz zum Bauteil (7) angeordneten Laserschweißköpfen (2) wobei die Bauteile (7) beim Schweißen von ein oder mehreren Bewegungseinrichtungen (8) in einer Relativbewegung gegenüber dem Laserschweißkopf (2) bewegt werden, **dadurch gekennzeichnet, dass** die Bauteile (7) von einer mehrachsigen Bewegungseinrichtung (8) entlang einer vorgegebenen, programmierten und mehrachsigen Bewegungsbahn geführt und bewegt werden.

12. Verfahren zum Laserschweißen nach Anspruch 11, **dadurch gekennzeichnet, dass** die Bauteile (7) von ein oder mehreren mehrachsigen Robotern (10) bewegt werden.

13. Verfahren zum Laserschweißen nach Anspruch 11 oder 12, **dadurch gekennzeichnet, dass** die Bauteile (7) von der Bewegungseinrichtung (8) mit einem Greifer gespannt werden.

14. Verfahren zum Laserschweißen nach Anspruch 11, 12 oder 13, **dadurch gekennzeichnet, dass** der Laserstrahl (4) beim Schweißen um mindestens eine Achse bewegt wird.

## Claims

1. Laser welding arrangement for welding of one or more components (7), comprising one or more laser welding heads (2) which is or are in the form of a remote laser and is or are arranged at a distance from the component (7), with the laser welding arrangement (1) having one or more movement devices (8) for the components (7) for a relative movement with respect to the laser welding head (2) during welding, **characterized in that** the movement device (8) has a plurality of axes, and the component (7) can be guided and moved along a predetermined, programmed and multiple-axis movement path.

2. Laser welding arrangement according to Claim 1, **characterized in that** the movement device (8) is in the form of a multiple-axis robot (10).

3. Laser welding arrangement according to Claim 1 or 2, **characterized in that** the movement device (8) has a gripper for gripping the component (7).

4. Laser welding arrangement according to Claim 1, 2 or 3, **characterized in that** the laser welding head (2) is arranged in a stationary manner.

5. Laser welding arrangement according to Claim 1, 2 or 3, **characterized in that** the laser welding head (2) is arranged in a non-stationary manner, by means of a movement device (11).

6. Laser welding arrangement according to one of the preceding claims, **characterized in that** the laser beam (4) can be moved about at least one axis.

7. Laser welding arrangement according to one of the preceding claims, **characterized in that** the laser welding head (2) has one or more scanner heads for controllable deflection of the laser beam (4).

8. Laser welding arrangement according to one of the preceding claims, **characterized in that** the movement device (8) for the components (7) is controlled on the basis of the focus distance.

9. Laser welding arrangement according to one of the preceding claims, **characterized in that** the laser welding head (2) has a focal length of about 200 to 400 mm.

10. Laser welding arrangement according to one of the preceding claims, **characterized in that** a plurality of laser welding heads (2) are connected to a common external laser beam source (3) by means of a controllable beam switch (6) and laser beam guides (5).

11. Method for laser welding of one or more components (7) by means of one or more laser welding heads (2) which is or are in the form of a remote laser and is or are arranged at a distance from the component (7), with the components (7) being moved during welding by one or more movement devices (8) in a relative movement with respect to the laser welding head (2), **characterized in that** the components (7) are guided and moved by a multiple-axis movement device (8) along a predetermined, programmed and multiple-axis movement path.

12. Method for laser welding according to Claim 11, **characterized in that** the components (7) are moved by one or more multiple-axis robots (10).

13. Method for laser welding according to Claim 11 or 12, **characterized in that** the components (7) are gripped by the movement device (8) with a gripper.

14. Method for laser welding according to Claim 11, 12 or 13, **characterized in that** the laser beam (4) is moved about at least one axis during welding.

## Revendications

1. Système de soudage par laser servant à souder un ou plusieurs composants (7) et constitué d'une ou de plusieurs têtes (2) de soudage au laser configurées sous la forme de laser à distance et pouvant être disposées à distance du composant (7),
le système (1) de soudage au laser présentant un ou plusieurs dispositifs de déplacement (8) des composants (7) qui permettent de les déplacer par rapport à la tête (2) de soudage au laser pendant le soudage, **caractérisé en ce que**
le dispositif de déplacement (8) est multiaxes et **en ce que** le composant (7) peut être guidé et déplacé suivant un parcours de déplacement prédéterminé, programmé et multiaxes.

2. Système de soudage au laser selon la revendication 1, **caractérisé en ce que** le dispositif de déplacement (8) est configuré comme robot multiaxes (10).

3. Système de soudage au laser selon les revendications 1 ou 2, **caractérisé en ce que** le dispositif de déplacement (8) présente un dispositif de saisie qui serre le composant (7).

4. Système de soudage au laser selon les revendications 1, 2 ou 3, **caractérisé en ce que** la tête (2) de soudage au laser est stationnaire.

5. Système de soudage au laser selon les revendications 1, 2 ou 3, **caractérisé en ce que** la tête (2) de soudage au laser est disposée en position non stationnaire à l'aide d'un dispositif de déplacement (11).

6. Système de soudage au laser selon l'une des revendications précédentes, **caractérisé en ce que** le faisceau laser (4) peut être déplacé autour d'au moins un axe.

7. Système de soudage au laser selon l'une des revendications précédentes, **caractérisé en ce que** la tête (2) de soudage au laser présente une ou plusieurs têtes de balayage qui permettent de dévier le faisceau laser (4) de manière contrôlée.

8. Système de soudage au laser selon l'une des revendications précédentes, **caractérisé en ce que** le dispositif de déplacement (8) des composants (7) est asservi à la distance focale.

9. Système de soudage au laser selon l'une des revendications précédentes, **caractérisé en ce que** la distance focale de la tête (2) de soudage au laser est d'environ 200 à 400 mm.

10. Système de soudage au laser selon l'une des revendications précédentes, **caractérisé en ce que** plusieurs têtes (2) de soudage au laser sont raccordées à une source externe commune (3) de faisceau laser au moyen d'un déviateur de faisceau (6) asservi et de guides (5) de faisceau laser.

11. Procédé de soudage au laser d'un ou plusieurs composants (7) au moyen d'une ou plusieurs têtes (2) de soudage au laser configurées comme laser à distance et disposées à distance du composant (7),
les composants (7) étant déplacés par rapport à la tête (2) de soudage au laser par un ou plusieurs dispositifs de déplacement (8) lors du soudage, **caractérisé en ce que**
les composants (7) sont guidés et déplacés par un dispositif de déplacement (8) multiaxes le long d'un parcours de déplacement prédéterminé, programmé et multiaxes.

12. Procédé de soudage au laser selon la revendication 11, **caractérisé en ce que** les composants (7) sont déplacés par un ou plusieurs robots multiaxes (10).

13. Procédé de soudage au laser selon les revendications 11 ou 12, **caractérisé en ce que** les composants (7) sont serrés par le dispositif de déplacement (8) au moyen d'un dispositif de saisie.

14. Procédé de soudage au laser selon les revendications 11, 12 ou 13, **caractérisé en ce que** lors du soudage, le faisceau laser (4) est déplacé autour d'au moins un axe.
